# EUROPEAN PATENT APPLICATION

(11) **EP 2 070 645 A1**
(43) Date of publication of application: **17.06.2009**
(21) Application number: 08171680.5
(22) Date of filing: 15.12.2008
(51) Int. Cl.: B23Q 3/06, B23Q 7/10, B23Q 7/14, B25B 5/00, B25B 11/00

(54) **Device for positioning parts to be processed in feeders of automatic machines**

(30) Priority: 13.12.2007 IT BO20070819
(71) Applicant: IEMCA Giuliani Macchine Italia S.p.A., 48018 Faenza (Ravenna) (IT)
(72) Inventor: Melandri, Pierantonio, 48018 Faenza (RA) (IT); Giampaolo, Andrea, 48018 Faenza (RA) (IT)
(74) Representative: Modiano, Micaela Nadia

(57) **Abstract**

A device for positioning parts to be processed in robotized feeders of automatic machines, comprising a deck (2) for supporting the parts, a first laminar element (8) and a second laminar element (9), which are arranged above the deck (2) and are mutually superimposed, the laminar elements (8, 9) being provided with openings (11, 17) that are arranged along a same preset pattern and with means (21, 22; 23, 24, 29) for actuating the laminar elements (8, 9) in a linear fashion with respect to each other and produce an overlap of the openings (11, 17) such as to define seats (18) whose breadth can be modified in order to receive the parts to be processed and allow stable positioning on the deck (2).

## Description

The present invention relates to a device for positioning parts to be processed in robotized feeders of automatic machines.

Automatic machines are known which are supplied with parts to be processed which are stored in a feeder with superimposed shelves. Each shelf is constituted by a sort of tray, which is provided with a plurality of seats arranged according to a preset order so as to accommodate the parts to be processed. The shelves are transferred individually into the automatic machine, which picks up the parts from the respective seats and subjects them to the intended processes and then, once the processes have ended, returns the parts to the respective seats.

Known feeders have the drawback that the seats of the shelves are preset to receive parts of a single type, so that when the processing of parts having a different structure is performed it is necessary to replace the shelves with other shelves provided with seats that are adapted to receive such different parts.

The aim of the present invention is to provide a device for positioning parts to be processed in a feeder of automatic machines that has adjustments that allow the positioning of parts of a different type.

Within this aim, an object of the present invention is to provide a device that allows to keep constant the position of the parts to be processed with respect to a fixed reference system and independently of their dimensions.

Another object of the invention is to provide a device that is structurally simple with respect to the technical performance provided and is flexible in use as regards the type of the parts that must be fed to the automatic machine on which the finishing processes are performed.

This aim and these and other objects, which will become better apparent hereinafter, are achieved by a device for positioning parts to be processed in robotized feeders of automatic machines, characterized in that it comprises a deck for supporting the parts, a first laminar element and a second laminar element, which are arranged above said deck and are mutually superimposed, said elements being provided with openings that are arranged along a same preset pattern and with means for actuating in a linear fashion said laminar elements with respect to each other and produce an overlap of said openings such as to define seats whose breadth can be modified in order to receive said parts to be processed and allow stable positioning on said deck.

Further characteristics and advantages of the present invention will become better apparent from the following detailed description of a preferred embodiment, illustrated by way of non-limiting example in the accompanying drawings, wherein:
Figure 1 is a perspective view of a device according to the invention;
Figure 2 is an exploded view of the device;

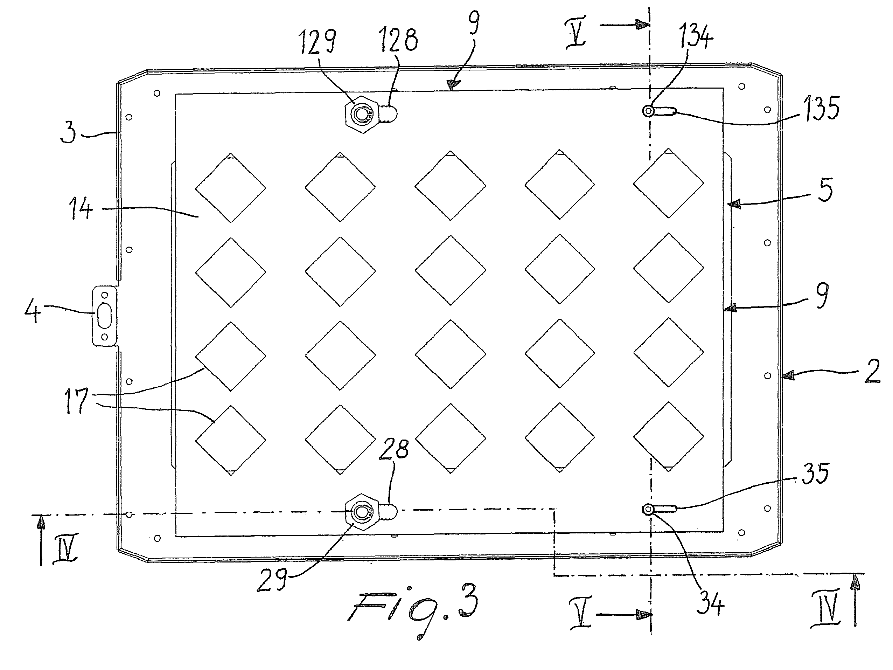

Figure 3 is a plan view of the device;
Figure 4 is a sectional view, taken along the line IV-IV of Figure 3;
Figure 5 is a sectional view, taken along the line V-V of Figure 3;
Figure 6 is an enlarged-scale view of the detail A circled in Figure 4;
Figure 7 is an enlarged-scale view of the detail B circled in Figure 5;
Figure 8 is an enlarged-scale perspective view of the detail A circled in Figure 4;
Figure 9 is a sectional view, taken along the line IX-IX of Figure 6;
Figure 10 is a plan view of the device in an operating situation for positioning the parts to be processed.

With reference to the figures, the reference numeral 1 generally designates a device according to the invention for positioning parts to be processed. The device 1 can be capable per se of acting as a feeder of an automatic machine for processing parts, for example an automatic lathe. Likewise, the device, together with other devices that perform its same function, can be part of a robotized feeder. In this last case, a plurality of devices 1 can be superimposed so as to form a stock that is functionally associated with a machine tool.

The illustrated device 1 comprises a rectangular deck 2 that is shaped like a tray around which a raised edge 3 is extended. The deck 2 is provided on one side with an engagement block 4 for moving it. A rectangular plate 5 made of plastic material is jointly connected at the center of the deck 2 and, as will become better apparent hereinafter, acts as a support for the parts to be machined.

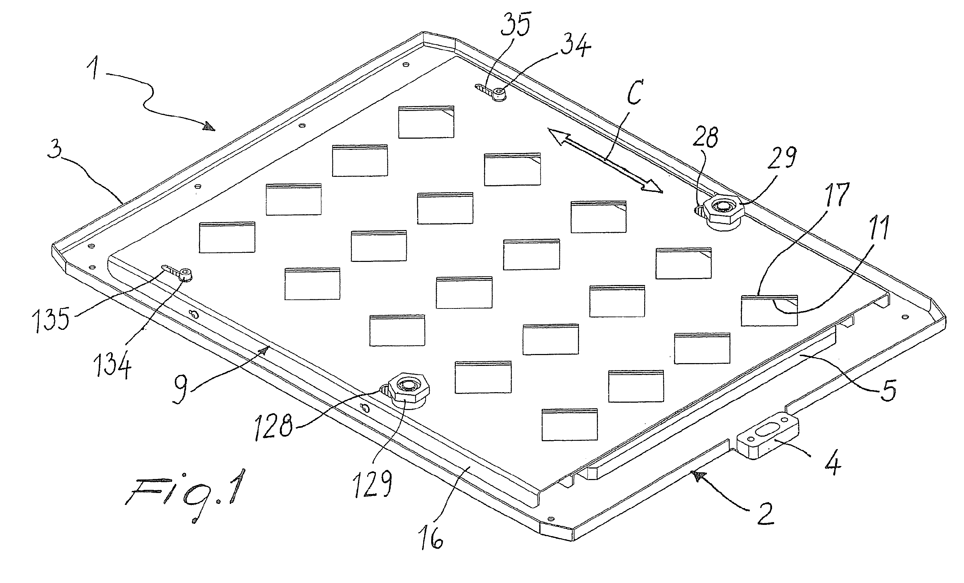

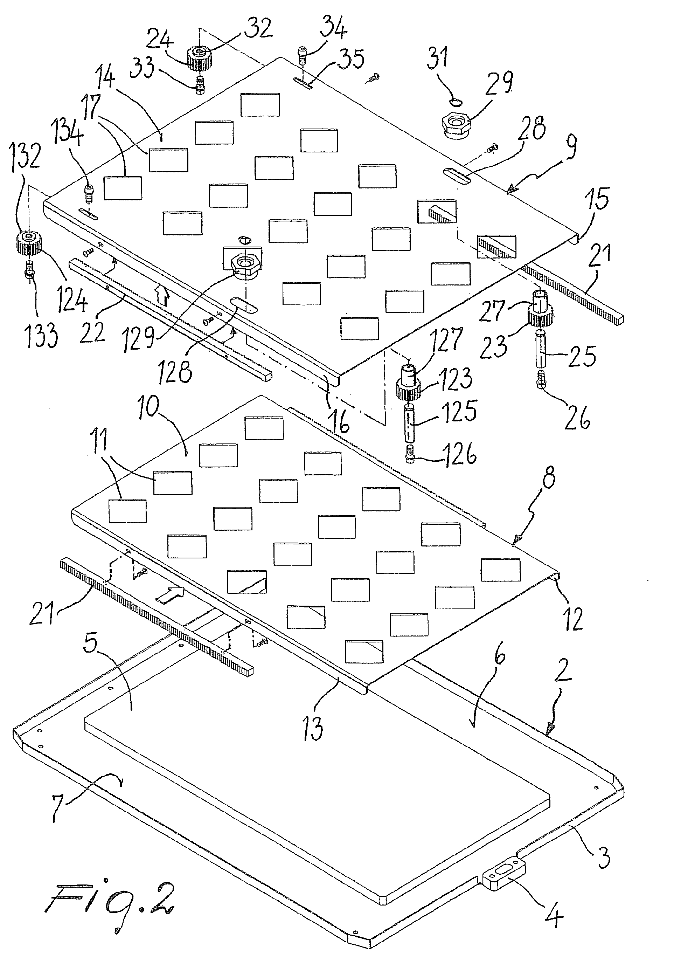

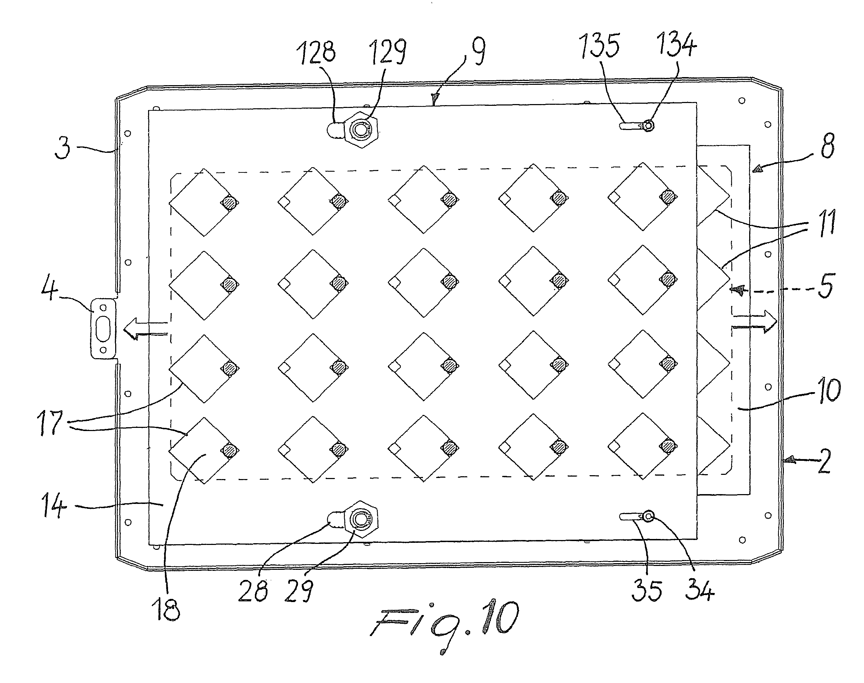

Two bands or regions 6, 7 (see Figure 2) remain between the longitudinal sides of the deck 2 and of the plate 5 and constitute two lanes on which the active elements of the device rest slidingly. Such active elements are constituted by a first lower laminar element 8 and by a second upper laminar element 9 superimposed thereon, which can slide with respect to each other in the direction C (see Figure 1), which is understood to be parallel to the longitudinal sides of the deck 2. The laminar elements 8, 9 are rectangular and can perform mutual opposite movements of such an extent as to always remain within the deck 2 and superimposed on the plate 5, as shown in Figure 10.

The lower laminar element 8 comprises a rectangular shelf 10 in which there are openings 11 arranged along rows which are orthogonal, i.e., are parallel and perpendicular to the direction C. The openings 11 are shaped like squares whose diagonals are aligned in directions that are respectively perpendicular and parallel to the direction C. The longitudinal opposite edges of the shelf 10 are provided with wings 12, 13 that extend downward, i.e., toward the deck 2, and by way of which the laminar element 8 rests slidingly on the lateral bands 6, 7 of the deck 2.

The upper laminar element 9 also is composed of a rectangular shelf 14, which is provided with two lateral wings 15, 16 that extend downward and are higher than the wings 12, 13. The shelf 14 is wider than the shelf 10 and the wings 15, 16 have such a height as to rest slidingly on the lateral bands 6, 7 of the tray, so as to support the shelf 14 above the shelf 10 without appreciable friction contact.

In the upper shelf 14 there is a plurality of openings 17, whose dimensions and arrangement are fully identical to those of the openings 11 of the underlying element 8, so that by moving the elements 8, 9 with respect to each other in a linear fashion in mutually opposite directions it is possible to make the openings 11, 17 overlap perfectly and fully or partially. The superimposed openings 11 and 17 define seats 18 of adjustable breadth (see Figure 10), in which the bottom is the plate 5 and the dimensions of which depend on the mutual position assumed by the laminar elements 8, 9. The seats 18 are designed to receive the parts to be processed D and, and by moving the laminar elements 8, 9 with respect to each other it is possible to vary their breadth as a function of the dimensions of the parts.

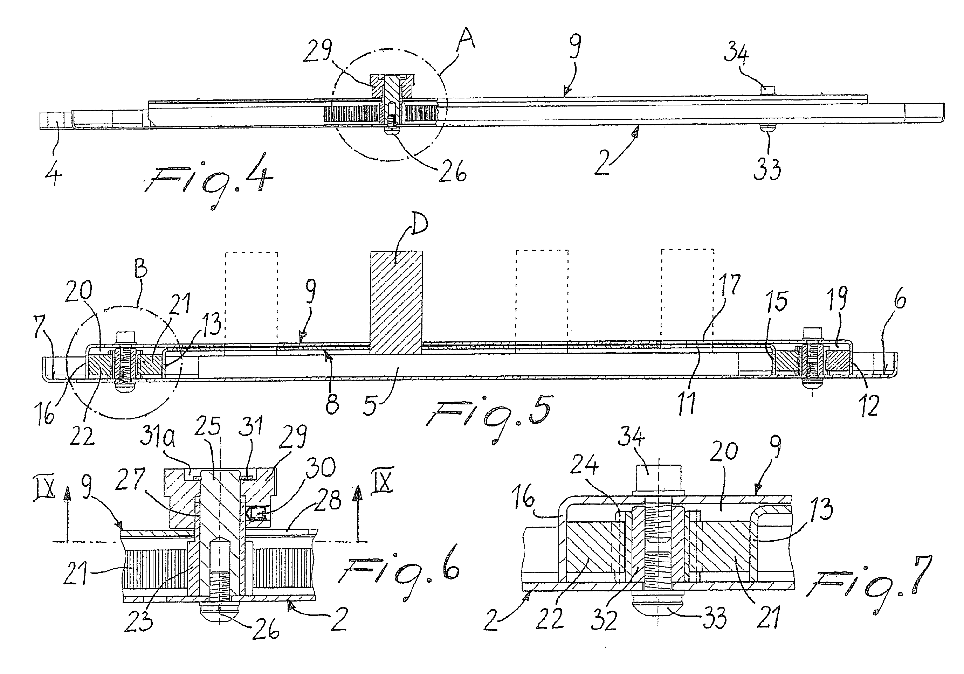

In order to actuate the movements of the laminar elements 8, 9, there are adjustment means arranged in two cavities 19, 20 formed in an upper region by the shelf 14 of the laminar element 9, in a lower region by the deck 2, on one side between the wings 12, 15 and on the opposite side between the wings 13, 16 (see Figure 5).

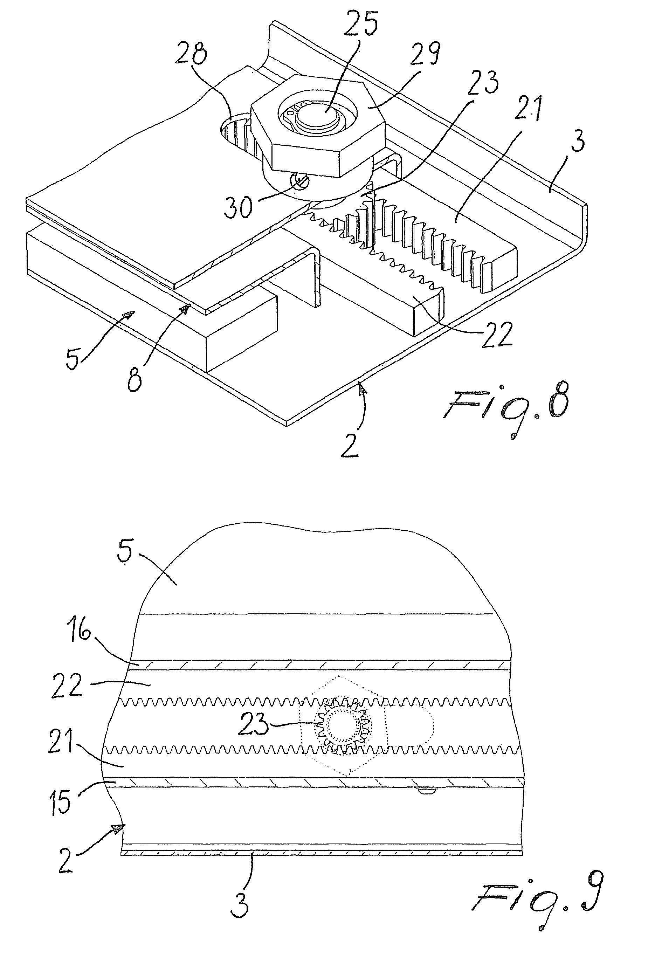

For the sake of simplicity of description, these adjustment means are subsequently illustrated only in relation to the ones accommodated in the cavity 20 and shown in enlarged scale in Figures 7 and 8, since they are fully identical to the means accommodated in the cavity 19.

The adjustment means comprise a pair of racks 21, 22 (see also Figure 2), which are fixed to the mutually opposite faces of the wings 13, 16 and with which two pinions 23, 24 mesh. The first pinion 23 (Figure 6) can rotate about a pivot 25, which rises from the deck 2 onto which it is fixed by means of a screw 26. The pinion 23 is provided with a tubular portion or sleeve 27, which is extended upward and emerges above the upper laminar element 9 through a slot 28 that is elongated in the direction C. The pivot 25 protrudes with one of its portions out of the top of the tubular portion 27 of the pinion 23, and a knob 29 is arranged rotatably thereon and is jointly connected for rotation to the tubular portion 27 by means of a grub 30, which is screwed into a threaded hole formed radially in the cylindrical collar of the knob and engages against the pivot 25.

The knob 29 substantially rests on the shelf 14 of the upper laminar element 9 and is retained axially on the pivot 25 by means of an elastic ring 31, which is recessed within a recess 31a formed in the head of the knob 29.

The second pinion 24 (see Figure 7) is supported so that it can rotate on an internally threaded bush 32 which is fixed to the deck 2 by means of a screw 33. The bush 32 has a height that is equal to the height of the cavity 20, and a second screw 34 is screwed therein, is driven from above through a slot 35 formed in the shelf 14 of the upper laminar element 9, and is capable of locking the upper laminar element 9 on the bush 32. The slot 35 is elongated in the direction A in alignment with the slot 28.

Since the adjustment means arranged in the cavity 19 are, as mentioned, constituted by components that are identical to the ones arranged in the cavity 20, they are designated in the figures by the same reference numerals 21 to 35 increased by 100.

The operation of the device according to the invention is as follows. In particular, by loosening the screws 34, 134 and then turning the two knobs 29, 129 it is possible, by means of the pinions 23, 123, to move in one direction or in the opposite direction the laminar elements 8, 9 and thus vary the position of the openings 11, 17 until seats 18 of the desired size to allow the seating of the parts to be processed D are obtained. When the openings 11, 17 have performed the intended movements determined by the strokes of the elements 8, 9, the screws 34, 134 are tightened and the elements 8, 9 are locked, so that the dimensions of the seats 18 cannot undergo dimensional changes. The parts to be processed D, once arranged in the seats 18, remain rested on the plate 5 and are prevented from moving laterally since they are retained by the edges of the openings 11, 17 (see Figures 5 and 10).

It should be noted that the pinions 24, 124 help to keep straight the movement of the laminar elements 8, 9 performed by the actuation of the knobs 29, 129. Further, by varying the thickness of the plate 5 it is possible to vary the depth of the seats 18 depending on the configuration that the parts must assume for correct conveyance to the machine tool.

A substantial advantage of the invention is that the position of the seats 18 remains constant with respect to a reference system that is jointly connected to the deck 2. This particularity significantly shortens the time required for the setup and reprogramming of the device to adapt it to products having different characteristics.

Numerous modifications and variations are possible in the practical embodiment of the invention, and all are within the scope of the appended claims. In particular, the openings 11, 17 may have any shape that is complementary to the one required for safe and stable positioning of the parts to be processed.

In a further variation, instead of the plate 5, the lower openings 11 are closed by a bottom that is jointly connected thereto but is lowered with respect to the shelf 10, so that the bottom can act as a support for the base of the parts to be processed.

The disclosures in Italian Patent Application No. BO2007A000819, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for positioning parts to be processed in robotized feeders of automatic machines, **characterized in that** it comprises a deck (2) for supporting the parts, a first laminar element (8) and a second laminar element (9), which are arranged above said deck (2) and are mutually superimposed, said laminar elements (8, 9) being provided with openings (11, 17) that are arranged along a same preset pattern and with means (21, 22; 23, 24, 29) for actuating in a linear fashion said laminar elements (8, 9) with respect to each other and produce an overlap of said openings (11, 17) such as to define seats (18) whose breadth can be modified in order to receive said parts to be processed and allow stable positioning on said deck (2).

2. The device according to claim 1, **characterized in that** said means comprise at least one pair of racks (21, 22) which are fixed, parallel to each other, to the second laminar element (9) and to the first laminar element (8) and mesh with an actuation pinion (23, 123) that is interposed between them, said pinion (23, 123) being able to rotate on a pivot (25, 125) that is jointly connected to said deck (2), so as to move said laminar elements (8, 9) in mutually opposite directions to adjust the mutual position of the superimposed openings (11, 17) and the breadth of said seats (18) so that their position remains constant with respect to a reference system that is jointly connected to said deck.

3. The device according to one of claims 1, 2, **characterized in that** said racks (21, 22) mesh with a free pinion (24, 124) that is interposed between them and cooperates with said actuation pinion (23, 123) to keep said laminar elements (8, 9) aligned during their mutual movement.

4. The device according to one of claims 1 to 3, **characterized in that** said laminar elements (8, 9) each comprise a rectangular shelf (10, 14) provided with said openings (11, 17) and, on each side of said shelves (10, 14), mutually opposite wings (12, 15; 13, 16) that are extended toward said deck (2) and rest on it in order to support slidingly said laminar elements (8, 9) on said deck (2), said racks (21, 22) being jointly connected to the wings (12, 15; 13, 16) arranged on both sides of said shelves (10, 14) and being mutually parallel and engaged by respective actuation pinions (23, 123).

5. The device according to one of claims 3, 4, **characterized in that** each actuation pinion (23, 123) is provided with a tubular portion (27, 127) which accommodates a pivot (25, 125) which is jointly connected to said deck (2) for the rotary support of said pinion (23, 123), each one of said portions (27, 127) engaging slidingly a respective slot (28, 128) of said laminar elements (8, 9) which is parallel to said racks (21, 22) and is coupled rotationally to an actuation knob (29, 129).

6. The device according to claims 3 to 5, **characterized in that** each free pinion (24, 124) is supported so that it can rotate on a bush (32, 132) that is jointly connected to said deck (2), said laminar elements (8, 9) being provided with slots (35, 135) that are parallel to said racks (21, 22) for the engagement in said bushes (32, 132) of screws (34, 134) for locking said laminar elements (8, 9).

7. The device according to claim 6, **characterized in that** the tubular portion (27, 127) of said pinions (23, 123) and of said knobs (29, 129) is coupled rotationally to the respective actuation pinion (23, 123).

8. The device according to claim 7, **characterized in that** said knob (29) is rotationally jointly connected to said tubular portion (27) by means of a grub (30) that is screwed into a threaded hole that is formed radially in the cylindrical collar of said knob (29) and engages against said pivot (25).

9. The device according to one of the preceding claims, **characterized in that** said openings (11, 17) provided in said laminar elements (8, 9) are shaped like squares whose diagonals are parallel and respectively perpendicular to said racks (21, 22).

10. The device according to one of the preceding claims, **characterized in that** a plate (5) for supporting the parts to be processed (D) arranged in said seats (18) is arranged between said deck (2) and the shelf (10) of the lower laminar element (8).
